**Europäisches Patentamt**

**European Patent Office**

**Office européen des brevets**

(11) Veröffentlichungsnummer: **0 442 108 A1**

## (12) EUROPÄISCHE PATENTANMELDUNG

(21) Anmeldenummer: 90124672.8

(22) Anmeldetag: 19.12.90

(51) Int. Cl.5: **A01F 15/10**

(30) Priorität: 16.02.90 DE 9001858 U

(43) Veröffentlichungstag der Anmeldung:
21.08.91 Patentblatt 91/34

(84) Benannte Vertragsstaaten:
**DE DK FR GB IT NL**

(71) Anmelder: **CLAAS OHG**
**Postfach 1140 Münsterstrasse 31**
**W-4834 Harsewinkel- 1(DE)**

(72) Erfinder: **Ortkras, Norbert**
**Im Westfeld 3**
**W-4834 Harsewinkel 3(DE)**

(54) **Kolbenpresse zur Herstellung von Pressballen aus Erntegut.**

(57) Die Erfindung betrifft eine Gleitkolbenpresse zum Herstellen von Erntegutgroßballen und einem Zuführkanal mit Gutraffer, wobei der Raffer mehrere mit Abstand zueinander angeordnete Zinken aufweist. Als erfindungswesentlich wird der Vorschlag angesehen, daß jeder Rafferzinken (21', 22) als Doppelzinken ausgebildet ist, wobei die beiden Zinken (30) und (31) eines jeden Doppelzinkens in einer senkrechten Ebene angeordnet sind.

Fig. 1

EP 0 442 108 A1

# KOLBENPRESSE ZUR HERSTELLUNG VON PRESSBALLEN AUS ERNTEGUT

Die Neuerung betrifft eine Kolbenpresse zum Herstellen von Großballen aus Erntegut mit einem in einen Preßkanal über einen Kurbeltrieb hin- und herbewegbaren Preßkolben, einem in den Preßkanal mündenden Zuführ- und Vorpreßkanal, dem ein Gutraffer zugeordnet ist, der ebenfalls von einem Kurbeltrieb bewegbar ist, wobei die Bewegungsbahn des Raffers durch einen vom Antrieb für den Preßkolben abgeleiteten Hilfstrieb veränderbar ist und wobei der Raffer mehrere mit Abstand zueinander angeordnete Rafferzinken aufweist. Aus der DE-OS 36 38 792 ist eine derartige Kolbenpresse bekannt.

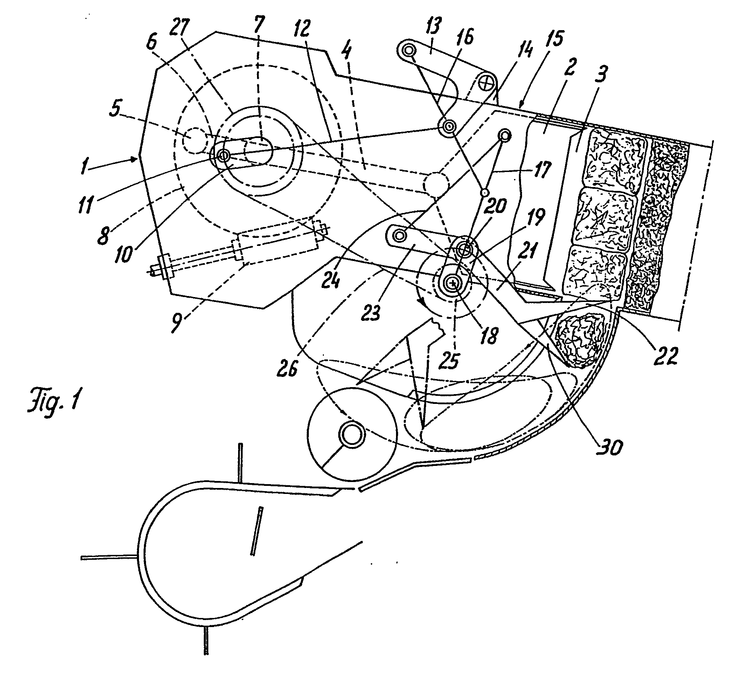

Fig.1     zeigt dabei eine Schubkolben-Ballenpresse teilweise im Schnitt und

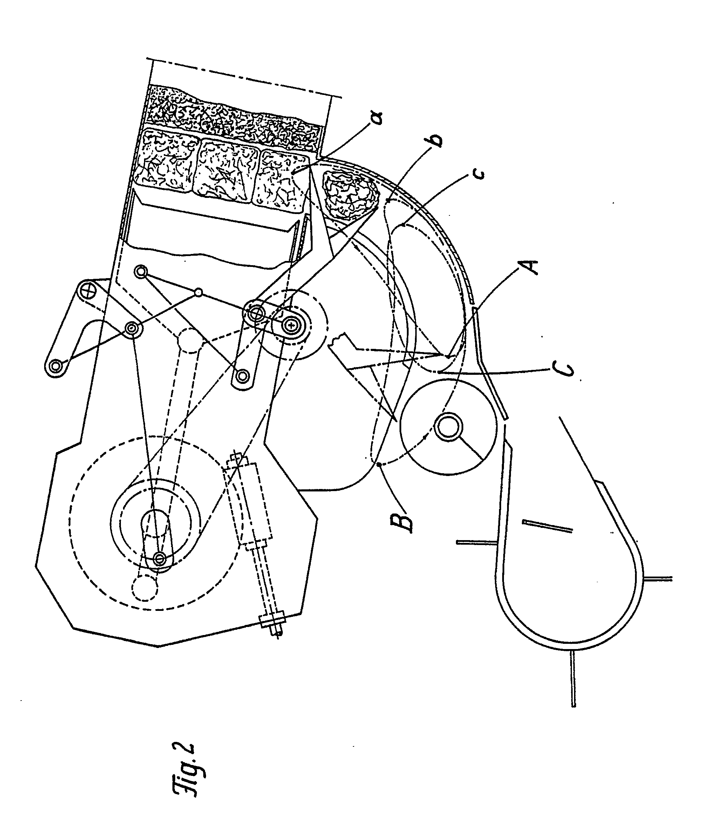

Fig. 2     eine Darstellung entsprechend der Fig. 1 zwecks Verdeutlichung des Arbeitsweges der Raffereinrichtung,

Fig.3     eine Perspektivische Darstellung des Rafferantriebes.

Dabei ist mit 1 eine Kolbenpresse bezeichnet, deren Kolben 2 in einem Preßkanal 3 über eine Kolbenstange hin- und herbewegbar ist. Zu diesem Zweck greift die Kolbenstange 4 einendig an einen Kurbelzapfen 5 an, dessen Kurbelarm 6 auf der Welle 7 befestigt ist. Diese Welle 7 wird kontinuierlich von einem Schneckenrad 8 und einer in letzteres eingreifenden Schnecke 9 angetrieben.

Neben dem Kurbelarm 6 trägt die Welle 7 noch einen weiteren Kurbelarm 10, dessen Kurbelzapfen 11 eine Koppel 12 trägt, die mit ihrem dem Kurbelzapfen 11 abgewandten Ende mit einem Ende eines Winkelhebels 13 verbunden ist.

Letzterer ist schwenkbar in einer Konsole 14 gelagert, die mit dem Gehäuse 15 der Kolbenpresse 1 fest verbunden ist. An dem Ende des Winkelhebels 13, das dem Lagerpunkt für die Koppel 12 entfernt liegt, greift eine weitere Koppel 16 an, die den Winkelhebel 13 gelenkig mit einem Schwenkhebel 17 verbindet. Letzter ist frei drehbar auf der Welle 18 gelagert. Der auf dieser Welle 18 gesetzte Kurbelarm 19 trägt Zapfen 20, auf die die äußeren verlängerten Raffer 21 drehbar aufgesetzt sind. Mit diesen äußeren Raffern 21 sind die zwischen ihnen angeordneten übrigen Rafferzinken 21' mittels einer Quertraverse 21" zu einer Raffereinheit verbunden. Zumindest einer der äußeren verlängerten Raffer 21 weist an seinem der Rafferspitze 22 entgegengesetztem Ende 23 eine Stange 24 auf, welche eine Verbindung zu dem Schwenkhebel 17 darstellt. Der Antrieb des Kurbelarmes 19 erfolgt über ein mit diesem verbundenen Kettenrad 25, einer Kette 26 sowie dem fest auf der Welle 7 sitzendem Kettenrad 27. Die Übersetzung zwischen dem Kettenrad 25 und dem Kettenrad 27 ist so gewählt, daß das Kettenrad 25 bei einer Umdrehung des Kettenrades 27 drei Umdrehungen macht. Durch dieses Übersetzungsverhältnis und durch die Anordnung des Hebelgetriebes (12,13 ,16,17,24) wird erreicht, daß die Raffer 21 während eines Kolbenhubes des Preßkolbens 2 drei Rafferhübe ausführen und die Rafferspitzen 22 dabei die drei mit strichpunktierten Linien angedeuteten Bewegungsbahnen durchlaufen. Die sich hieraus ergebenden Verhältnisse in bezug auf die Befüllung des Preßkanals 3 mit Erntegut durch die Einfüllöffnung 28 brauchen an dieser Stelle nicht näher erläutert werden, weil sie deutlich in der deutschen patentanmeldung P 36 38 792 beschrieben sind. Zu erwähnen wäre noch, daß das zuvor beschriebene Hebelgetriebe selbstverständlich auf beiden Seiten der Presse zwecks gleichmäßigerer und besserer Kraftübertragung angeordnet sein kann.

Der dieser bekannten Kolbenpresse anhaftende Nachteil wird deutlich, wenn man die Bewegungsbahnen, die die Rafferzinken 22 durchlaufen verfolgt. Nachstehend wird der sich rhythmisch verändernde Umlaufweg der Rafferzinken 21' und 22, ausgehend von dem, dem Preßkanal 3 am nächsten zugewandten Umlaufpunkt, dem Ladehub, erläutert.

Bei einem angenommenen Laufbeginn der Zinken 22 bei Pkt. (a) bewegen sich diese zum Pkt.(A) und von dort über Pkt.(b) nach Pkt. (B). Nach Durchlauf des Pkt. (b) ist nach dem Ladehub die erste Portion Preßgut in den Zuführkanal gegen worden. Vom Pkt. (B) ausgehend wird anschließend eine zweite Preßgutportion bei Pkt. (c) zugeführt. Vom Pkt. (c) aus fahren die Rafferzinken 22 über Pkt. (C) in dem Ladehub wieder nach Pkt. (a). Der eigentliche Ladehub, d.h. der Hub, mit dem der Zuführkanal in einem Mal geleert wird findet dann statt, wenn sich die Rafferzinkenspitzen von dem Punkt (C) zum Punkt (a) bewegen. Bei dem dann nachfolgenden Vorverdichtungshub von (A) nach (b) greifen die Rafferspitzen 22 an einem Punkt in das zugeführte Gut ein (A), der hinter den Eingriffspunkten (B) und (C) liegt. Dies bedeutet, daß das in dem Zwischenraum zwischen Pkt.(B) und Pkt. (A) befindliche Gut nicht von den Zinken erfaßt wird, wobei nur eine geringere Gutmenge gefördert wird. Die Praxis hat gezeigt, daß sich durch diese Tatsache Gut aufstauen kann, was zum Verstopfen des Zuführkanals führt.

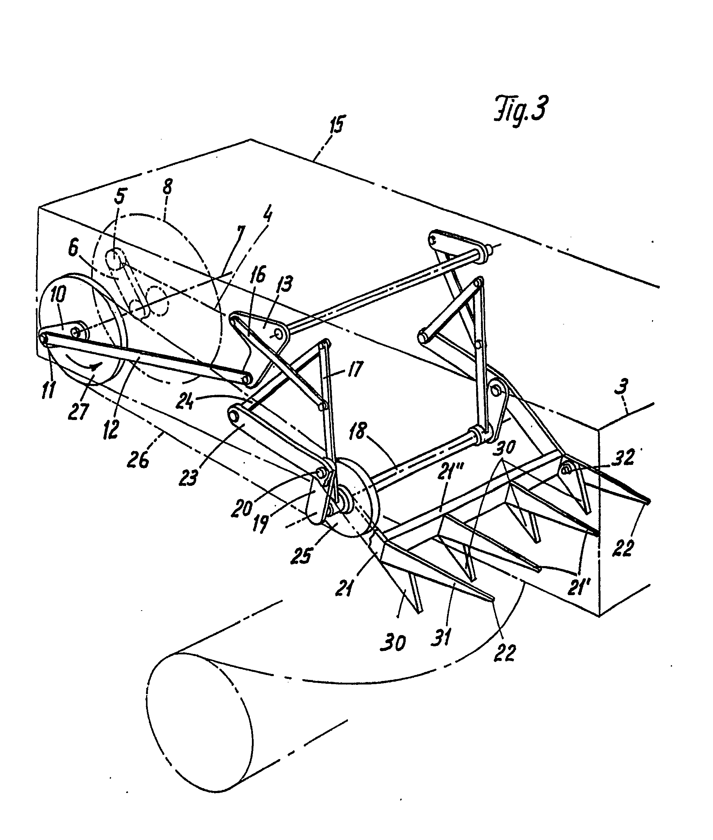

Dieser vorliegenden Neuanmeldung liegt daher die Aufgabe zugrunde, eine solche bekannte Kolbenpresse dahingehend zu verbessern, daß sich kein Gutstau mehr im Zuführkanal aufbauen kann. Diese Aufgabe wird dadurch gelöst, daß jeder Rafferzinken 21, 21' als Doppelzinken ausgebildet ist, wobei die beiden Zinken 30, 31 eines jeden Doppelzinkens zueinander in einer senkrechten Ebene angeordnet sind. Auf vorteilhafte Weise kann dabei die Winkelstellung zweier einen Doppelzinken bildenden Zinken über eine Klemmverbindung 32 zueinander veränderbar sein. Alternativ hierzu ist es natürlich möglich, die Doppelzinken einstückig auszubilden (Fig. 3), wodurch ihre Lage zueinander fixiert ist.

**Patentansprüche**

1.  Kolbenpresse zum Herstellen von Großballen aus Erntegut mit einem in einen preßkanal über einen Kurbeltrieb hin- und herbewegbaren preßkolben, einem in den Preßkanal mündenden Kanal, der das Gut im Längsfluß dem Preßkanal zuführt sowie einem dem Zuführkanal zugeordneten Gutraffer, der ebenfalls von einem Kurbeltrieb bewegbar ist, wobei die Bewegungsbahn des Raffers durch ein vom Antrieb für den preßkolben abgeleiteten Hilfsantrieb veränderbar ist und wobei der Raffer mehrere mit Abstand zueinander angeordnete Rafferzinken aufweist,
    **dadurch gekennzeichnet,**
    daß jeder Rafferzinken (21' ,22) als Doppelzinken ausgebildet ist, wobei die beiden Zinken (30) und (31) eines jeden Doppelzinkens in einer senkrechten Ebene angeordnet sind.

2.  Kolbenpresse nach Anspruch 1,
    **dadurch gekennzeichnet,**
    daß die winkelstellung zweier einen Doppelzinken (21',22) bildenden Zinken (30) und (31) zueinander veränderbar ist.

3.  Kolbenpresse nach Anspruch 1,
    **dadurch gekennzeichnet,**
    daß jeder Doppelzinken (21',22) einstückig ausgebildet ist.

Fig. 1

*Fig.2*

EP 0 442 108 A1

Fig.3

<table>
<tr><td></td><td>Europäisches<br>Patentamt</td><td><b>EUROPÄISCHER RECHERCHENBERICHT</b></td><td>Nummer der Anmeldung<br><br>EP 90 12 4672</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 638 792 (CLAAS OHG) <br> * Spalte 1, Zeilen 50-63; Abbildungen 1,2 * <br> --- | 1-3 | A 01 F 15/10 |
| Y | EP-A-0 026 003 (BAMFORDS LTD.) <br> * Seite 5, Zeilen 25-38; Seite 8, Zeilen 1-9; Abbildungen 1,2 * <br> --- | 1-3 | |
| A | US-A-2 731 783 (VERNON O. HAUSWIRTH) <br> * Spalte 3, Zeilen 31-51; Abbildungen 3-5 * <br> --- | 1,2 | |
| A | FR-A-1 019 228 (GEBRUEDER CLAAS) <br> * Abbildung 1 * <br> ----- | 3 | |

RECHERCHIERTE SACHGEBIETE (Int. Cl.5)

A 01 F

Der vorliegende Recherchenbericht wurde für alle Patentansprüche erstellt

| Recherchenort | Abschlußdatum der Recherche | Prüfer |
|---|---|---|
| BERLIN | 11-02-1991 | MARTIN DEL RIO A |